# EUROPÄISCHE PATENTSCHRIFT

(11) **EP 2 110 420 B1**
(45) Veröffentlichungstag und Bekanntmachung des Hinweises auf die Patenterteilung: **22.09.2010**
(21) Anmeldenummer: 08154412.4
(22) Anmeldetag: 11.04.2008
(51) Int. Cl.: C09J 5/06

(54) **Verfahren zum Aufbringen einer Haftvermittler-Zusammensetzung auf ein Substrat**
Method for applying an adhesive compound to a substrate
Procédé d'application d'une composition d'agent adhésif sur un substrat

(43) Veröffentlichungstag der Anmeldung: 21.10.2009
(73) Patentinhaber: Sika Technology AG, 6340 Baar (CH)
(72) Erfinder: Huck, Wolf-Rüdiger, 8044 Zürich (CH); Nufer, Remo, 8307 Effretikon (CH)
(74) Vertreter: Sika Patent Attorneys

(56) Entgegenhaltungen:
- EP-A- 1 857 188
- DE-A1-102004 033 728

## Beschreibung

### Technisches Gebiet

Die Erfindung betrifft das Gebiet der Applikationstechnik zum Aufbringen einer Haftvermittlerzusammensetzung auf ein Substrat.

### Stand der Technik

Haftvermittlerzusammensetzungen werden konventionell zur Verbesserung der Haftung von Stoffen, insbesondere von Kleb- und Dichtstoffen, auf einem Substrat verwendet. So sind beispielsweise Silan- und Titanat-Verbindungen, die als sogenannte Primer- oder Haft-Aktivatoren für die Vorbehandlung von zu verklebenden oder abzudichtenden Oberflächen verwendet werden, dem Fachmann bekannt.

Für das Aufbringen einer Haftvermittlerzusammensetzung auf ein Substrat wurden verschiedene Verfahren vorgeschlagen.

So wird etwa gemäss WO 2006/005606 ein Haftvermittler im Walz-, Sprüh- oder Tauchverfahren auf die betreffenden Werkstücke aufgebracht.

Besagte Verfahren weisen den Nachteil auf, dass die aufzutragende Menge an Haftvermittlerzusammensetzung nur schwierig zu dosieren ist. Überdies ist bei höher viskosen Haftvermittlerzusammensetzungen der Anwendungsbereich dieser Verfahren stark eingeschränkt, da etwa beim Auftragen auf eine raue Oberfläche die Haftvermittlerzusammensetzung nicht vollständig in die Poren eindringt und die Oberfläche somit nicht vollständig benetzt wird.

Aus ökonomischen Gründen und um überdies eine optimale Haftung zu erzielen, ist es zudem oft erwünscht, nur geringe Mengen einer Haftvermittlerzusammensetzung auf das Substrat aufzutragen. Dies kann mit den genannten Verfahren nur dann erzielt werden, wenn die aufzutragende Haftvermittlerzusammensetzung verdünnt wird, vorzugsweise mit einem leicht flüchtigen Lösungsmittel. Allerdings ist der Einsatz von ablüftenden Lösungsmitteln vielfach aufgrund der durch Arbeitshygiene und -sicherheit notwendigen Rahmenbedingungen und Zusatzeinrichtungen nachteilig. Dieses Problem ist in geschlossenen Produktionsstätten, in denen Haftvermittlerzusammensetzungen typischerweise aufgetragen werden, besonders akut.

Ausgehend von den genannten Problemen wurde in WO2007/132013 die Verwendung eines Ultraschallzerstäubers zum Auftragen einer Haftvermittlerzusammensetzung auf eine Substratoberfläche vorgeschlagen. Nachteilig daran ist, dass ein solches Auftragen eine relativ ausgeklügelte Applikationsapparatur erfordert.

### Darstellung der Erfindung

Aufgabe der vorliegenden Erfindung ist es somit, ein einfaches und sicheres Verfahren zur Verfügung zu stellen, welches es erlaubt, auch geringe Mengen einer Haftvermittlerzusammensetzung homogen auf ein Substrat aufzubringen.

Dadurch, dass ein Ablüften des Lösungsmittels nicht mehr nötig ist, kann zudem das Aufbringen eines Klebstoffs oder Dichtstoff unmittelbar nach dem Auftragen der Haftvermittlersubstanz erfolgen.

Die Aufgabe wird erfindungsgemäss durch das Verfahren gemäss Anspruch 1 gelöst. Bevorzugte Ausführungsformen des Verfahrens sind in den abhängigen Ansprüchen 2 bis 10 wiedergegeben.

Ein weiterer Aspekt der Erfindung betrifft eine Vorrichtung gemäss Anspruch 11 und 12.

### Wege zur Ausführung der Erfindung

Die Erfindung betrifft ein Verfahren zum Aufbringen einer mindestens eine Haftvermittlersubstanz enthaltenden Haftvermittlerzusammensetzung auf ein Substrat, wobei die Haftvermittlersubstanz verdampft wird und der gebildete Dampf mittels eines Trägergases zum Substrat transportiert wird.

Die typischerweise verwendeten Haftvermittlersubstanzen weisen in der Regel einen Siedepunkt bei Normdruck oberhalb des Zersetzungspunkts auf. Aufgrund des Dampfdrucks der flüssigen Haftvermittlersubstanz stellt sich aber schon bei relativ tiefen Temperaturen, die unterhalb des Zersetzungspunkts und somit auch unterhalb des Siedepunkts der Haftvermittlersubstanz liegen, ein Gleichgewicht zwischen flüssiger Phase und gasförmiger Phase ein, wobei Haftvermittlersubstanz von der flüssigen in die gasförmige Phase übertritt. Dadurch, dass mittels des Trägergases fortlaufend die in der gasförmigen Phase vorliegende Haftvermittlersubstanz aus diesem Gleichgewicht weggeführt wird, wird ein kontinuierlicher Übertritt der Haftvermittlersubstanz von der flüssigen Phase in die gasförmige Phase auch bei Temperaturen unterhalb des Siedepunkts gewährleistet. Durch dieses stetige "Verdunsten" findet somit ein kontinuierlicher Transport an Haftvermittlersubstanz zu dem Substrat, welches dem Trägergas exponiert ist, statt. Überraschenderweise reicht bereits eine relativ kurzzeitige Exposition des Substrats aus, um eine ausreichende Menge an Haftvermittlersubstanz pro Substratfläche aufzubringen, die die gewünschte Haftvermittlung gewährleistet.

Das erfindungsgemässe Verfahren erlaubt es somit, die Haftvermittlerzusammensetzung, bzw. die in dieser enthaltene Haftvermittlersubstanz, auch dann in geringer Menge homogen aufzutragen, wenn eine stark verminderte Menge an Lösungsmittel oder gar kein Lösungsmittel vorliegt. Gemäss einer bevorzugten Ausführungsform ist die Haftvermittlersubstanz im Wesentlichen frei von Lösungsmitteln, d.h. dass Lösungsmittel zu höchstens 5 Gew.-%, insbesondere höchstens 1 Gew.-%, bevorzugt höchstens 0.5 Gew.-%, vorliegt. Dadurch wird der die Haftvermittlerzusammensetzung auftragende Anwender keinerlei Belastung durch flüchtige Lösungsmittel ausgesetzt, was ein sicheres Arbeiten gewährleistet. Durch VOC-Vorschriften auferlegte Limitierungen können somit vollständig vermieden werden. Überdies kann durch den Wegfall der Ablüftezeit das behandelte Substrat unmittelbar nach dem Aufbringen der Haftvermittlerzusammensetzung weiterverarbeitet werden. Somit kann das Aufbringen eines Klebstoffs oder Dichtstoff unmittelbar nach dem Auftragen der Haftvermittlersubstanz erfolgen. Dies kann beispielsweise mittels Applikationsroboter erfolgen auf dessen Arm gleichzeitig ein Gerät zur Applikation der Haftvermittlerzusammensetzung, bzw. -substanz sowie eine Gerät zur Applikation eines Kleb- oder Dichtstoffes angeordnet sein. Dies hat zur Folge, dass nur noch eine Roboterstation nötig ist und deshalb weniger Platz benötigt wird sowie die Taktzeit erniedrigt werden kann.

Ein weiterer Vorteil des erfindungsgemässen Verfahrens liegt darin, dass die Haftvermittlersubstanz unter schonenden Bedingungen und somit gut kontrollierbar zum Substrat transportiert werden kann. Es unterscheidet sich somit grundlegend von dem etwa aus der EP-A-1388470 bekannten Verfahren, gemäss welchem haftvermittelnde Verbindungen einem reaktiven Plasma zugesetzt werden.

Überdies erlaubt es das erfindungsgemässe Verfahren, die Haftvermittlersubstanz, bzw. die diese enthaltende Haftvermittlerzusammensetzung, auf einem vorgegebenen Bereich der Substratoberfläche gezielt aufzutragen. Somit kann das Aufbringen der Haftvermittlerzusammensetzung auf jene Bereiche eingegrenzt werden, die mit dem Kleb- oder Dichtstoff in Kontakt gebracht werden, was insbesondere hinsichtlich des Verbrauchs der Haftvermittlersubstanz und des ästhetischen Erscheinungsbildes des verklebten, bzw. abgedichteten, Substrats von Vorteil ist.

Um die gewünschte Menge an Haftvermittlersubstanz in der auf dem Substrat aufgebrachten Haftvermittlerzusammensetzung einzustellen, kann je nach Haftvermittlersubstanz etwa die Verdampfungstemperatur, der Fluss des Trägergases, die Kontaktfläche zwischen der Haftvermittlersubstanz in der flüssigen Phase und dem Trägergas und/oder die Expositionsdauer des Substrats entsprechend variiert werden.

Für das erfindungsgemässe Verfahren besonders gut geeignete Haftvermittlersubstanzen stellen etwa hydrolysierbare Haftvermittlersubstanzen dar.

Die mindestens eine hydrolysierbare Haftvermittlersubstanz kann eine Organo-Siliziumverbindung sein. Grundsätzlich sind alle dem Fachmann bekannten Organo-Siliziumverbindungen, welche als Haftvermittler eingesetzt werden, geeignet. Bevorzugt trägt diese Organo-Siliziumverbindung mindestens eine, bevorzugt drei, Alkoxygruppen, welche über eine Sauerstoff-Silizium-Bindung direkt an ein Siliziumatom gebunden ist oder sind. Weiterhin trägt die Organo-Siliziumverbindung mindestens einen Substituenten, welcher über eine Silizium-Kohlenstoffbindung an das Siliziumatom gebunden ist und welcher gegebenenfalls eine funktionelle Gruppe aufweist, welche ausgewählt ist aus der Gruppe bestehend aus Oxiran-, Hydroxy-, (Meth)acryloxy-, Amino-, Mercapto- Vinyl- und Nitrilgruppe.

Als Organo-Siliziumverbindungen sind besonders geeignet Organo-Siliziumverbindungen der Formeln Formel (I) oder (II) oder (III).

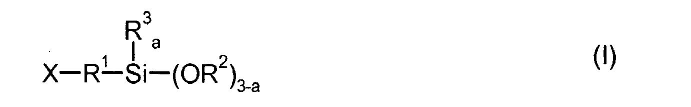

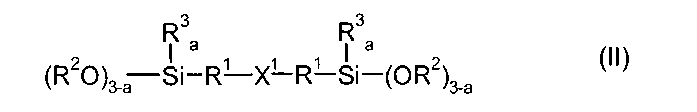

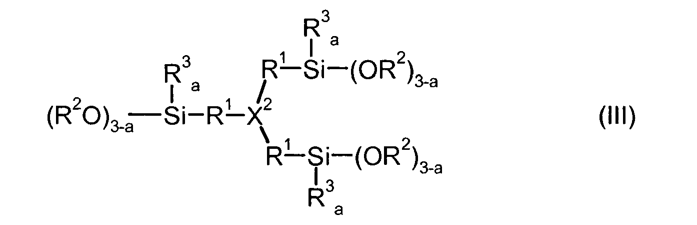

Hierbei steht R¹ für eine lineare oder verzweigte, gegebenenfalls cyclische, Alkylengruppe mit 1 bis 20 C-Atomen, gegebenenfalls mit aromatischen Anteilen, und gegebenenfalls mit einem oder mehreren Heteroatomen, insbesondere Stickstoffatomen.

R² steht für eine Alkylgruppe mit 1 bis 5 C-Atomen, insbesondere für eine Methyl- oder Ethylgruppe, oder eine Acylgruppe.

R³ steht für eine Alkylgruppe mit 1 bis 8 C-Atomen, insbesondere eine Methylgruppe.

X steht für H oder eine funktionelle Gruppe, welche ausgewählt ist aus der Gruppe bestehend aus einer Oxirangruppe, OH-Gruppe, (Meth)acryloxygruppe, Aminogruppe, SH-Gruppe, Acylthiogruppe und Vinylgruppe, bevorzugt für eine Aminogruppe. Der Vollständigkeit halber wird erwähnt, dass unter Acylthio in diesem Dokument der Substituent 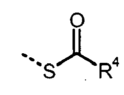 verstanden wird, wobei R⁴ für Alkyl, insbesondere mit 1 bis
20 Kohlenstoffatomen, steht und die gestrichelte Linie die Bindung zum Substituent R¹ darstellt,

X¹ steht für eine funktionelle Gruppe, welche ausgewählt ist aus der Gruppe bestehend aus NH, S, S₂ und S₄.

X² steht für eine funktionelle Gruppe, welche ausgewählt ist aus der Gruppe bestehend aus N und einer Isocyanurat-Gruppe, und a steht für einen der Werte 0, 1 oder 2, bevorzugt 0.

Der Substituent R¹ bedeutet insbesondere eine Methylen-, Propylen-, Methylpropylen-, Butylen- oder Dimethylbutylengruppe. Besonders bevorzugt wird als Substituent R¹ eine Propylengruppe.

Amino-, Mercapto- oder Oxiran-Gruppen aufweisende Organo-Siliziumverbindungen werden auch als "Aminosilane", "Mercaptosilane" oder "Epoxysilane" bezeichnet. Unter einem "Polyaminosilan" werden Siliziumverbindungen verstanden, welche mehrere Aminogruppen aufweisen. Unter einem "Polysilan" werden Siliziumverbindungen verstanden, welche mehrere Silangruppen aufweisen. Als "Silangruppe" wird hierbei die Gruppierung der Formel (I') verstanden. 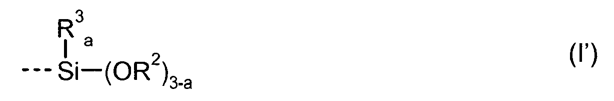 Die Rest R² und der Index a sind vorgängig definiert worden.

Als Organo-Siliziumverbindungen der Formel (I) sind beispielsweise geeignet die Organo-Siliziumverbindungen ausgewählt aus der Gruppe bestehend aus

Octyltrimethoxysilan, Dodecyltrimethoxysilan, Hexadecyltrimethoxysilan, Methyl-octyldimethoxysilan; 3-Glycidyloxypropyltrimethoxysilan, 3-Glycidyloxypropyltriethoxysilan; 3-Methacryloxypropyltrialkoxysilane, 3-Methacryloxypropyltriethoxysilan, 3-Methacryloxypropyltrimethoxysilan; 3-Aminopropyltrimethoxysilan, 3-Aminopropyltriethoxysilan, 3-Aminopropyl-dimethoxymethylsilan, 3-Amino-2-methylpropyl-trimethoxysilan, N-(2-Aminoethyl)-3-aminopropyl-trimethoxysilan, N-(2-Aminoethyl)-3-aminopropyl-tri-ethoxysilan, N-(2-Aminoethyl)-3-aminopropyl-dimethoxymethylsilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, 2-Aminoethyl-dimethoxymethylsilan, Aminomethyl-trimethoxysilan, Aminomethyl-dimethoxymethylsilan, Aminomethylmethoxydimethylsilan, 7-Amino-4-oxaheptyldimethoxymethylsilan, N-(Methyl)-3-aminopropyltrimethoxysilan, N-(n-butyl)-3-aminopropyltrimethoxysilan;
3-Mercaptopropyltriethoxysilan, 3-Mercaptopropyltrimethoxysilan, 3-Mercaptopropyl-methyldimethoxysilan;
3-Acylthiopropyltrimethoxysilan;
Vinyltrimethoxysilan und Vinyltriethoxysilan.

Auch bevorzugt sind die gerade genannten Organo-Siliziumverbindungen, deren Alkoxygruppen durch Acetoxygruppen ersetzt sind, wie zum Beispiel Octyltriacetoxysilan (Octyl-Si(O(O=C)CH₃)₃). Derartige Organo-Siliziumverbindungen spalten Essigsäure bei der Hydrolyse ab.

Bevorzugt sind bei diesen genannten Organo-Siliziumverbindungen diejenige, welche einen an das Siliziumatom gebundenen organischen Substituenten aufweisen, welcher zusätzlich noch eine funktionelle Gruppe aufweisen, das heisst, welcher keine Alkylgruppe ist, und einer Formel (I) entsprechen, in welcher X nicht H ist.

Als Organo-Siliziumverbindungen der Formel (II) sind geeignet beispielsweise die Organo-Siliziumverbindungen ausgewählt aus der Gruppe bestehend aus Bis-[3-(trimethoxysilyl)-propyl]-amin, Bis-[3-(triethoxysilyl)-propyl]-amin, 4,4,15,15-Tetraethoxy-3,16-dioxa-8,9,10,11-tetrathia-4-15-disilaoctadecan (Bis(triethoxysilylpropyl)polysulfid Bis(triethoxysilylpropyl)tetrasulfan) und Bis(triethoxysilylpropyl)disulfid.

Als Organo-Siliziumverbindungen der Formel (III) sind geeignet beispielsweise die Organo-Siliziumverbindungen ausgewählt aus der Gruppe bestehend aus Tris-[3-(trimethoxysilyl)-propyl]-amin, Tris-[3-(triethoxysilyl)-propyl]-amin, 1,3,5-tris[3-(trimethoxysilyl)propyl]-1,3,5-triazine-2,4,6(1H,3H,5H)-trionharnstoff (=Tris(3-(trimethoxysilyl)propyl)isocyanurat) und 1,3,5-tris[3-(triethoxysilyl)propyl]-1,3,5-triazine-2,4,6(1H,3H,5H)-trion-harnstoff (=Tris(3-(triethoxysilyl)propyl)isocyanurat).

Bevorzugt enthält die Haftvermittlerzusammensetzung keine Alkylsilane, d.h. bevorzugt ist H verschieden von H.

Bevorzugt als Organo-Siliziumverbindungen sind Aminosilane, insbesondere Aminosilane mit X = NH₂ oder NH₂-CH₂-CH₂-NH, X¹ = NH und X² = N. Besonders bevorzugt sind 3-Aminopropyltrimethoxysilan, N-(2-Aminoethyl)-3-aminopropyl-trimethoxysilan, Bis[3-(trimethoxysilyl)-propyl]-amin, 3-Aminopropyltriethoxysilan, N-(2-Aminoethyl)-3-aminopropyl-triethoxysilan und Bis[3-(triethoxysilyl)-propyl]-amin sowie deren Mischungen untereinander.

Die mindestens eine hydrolysierbare Haftvermittlersubstanz kann weiterhin eine Organo-Titanverbindung sein. Grundsätzlich sind alle dem Fachmann bekannte Organo-Titanverbindungen, welche als Haftvermittler eingesetzt werden, geeignet.

Insbesondere geeignet ist eine Organo-Titanverbindung, welche mindestens eine funktionelle Gruppe trägt, welche ausgewählt ist aus der Gruppe bestehend aus Alkoxygruppe, Sulfonatgruppe, Carboxylatgruppe, Dialkylphosphatgruppe, Dialkylpyrophosphatgruppe und Acetylacetonatgruppe, oder Mischungen davon, und welche über eine Sauerstoff-Titan-Bindung direkt an ein Titanatom gebunden ist.

Besonders geeignet sind Verbindungen, bei denen alle an das Titan gebundene Substituenten aus der Gruppe bestehend aus Alkoxygruppe, Sulfonatgruppe, Carboxylatgruppe, Dialkylphosphatgruppe, Dialkylpyrophosphatgruppe und Acetylacetonatgruppe ausgewählt sind, wobei alle Substituenten identisch oder verschieden von einander sein können.

Als Alkoxygruppen haben sich insbesondere sogenannte Neoalkoxy-Substituenten, insbesondere der folgenden Formel (IV) als besonders geeignet erwiesen.

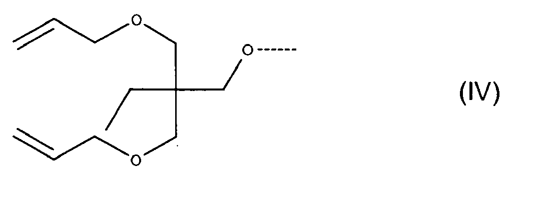

Als Sulfonsäuren haben sich insbesondere aromatische Sulfonsäuren, deren Aromaten mit einer Alkylgruppe substituiert sind, als besonders geeignet erwiesen. Als bevorzugte Sulfonsäuren gelten Reste der folgenden Formel (V).

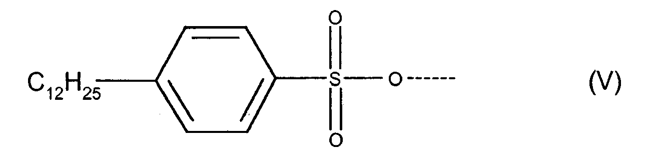

Als Carboxylatgruppen haben sich insbesondere Carboxylate von Fettsäuren als besonders geeignet erwiesen. Als bevorzugte Carboxylate gilt Decanoat.

In den obigen Formeln (IV) und (V) zeigt die gestrichelte Bindung hierbei die Sauerstoff-Titan-Bindung an.

Organo-Titanverbindungen sind kommerziell erhältlich, beispielsweise bei der Firma Kenrich Petrochemicals oder DuPont. Beispiele für geeignete Organo-Titanverbindungen sind beispielsweise Ken-React® KR TTS, KR 7, KR 9S, KR 12, KR 26S, KR 33DS, KR 38S, KR 39DS, KR44, KR 134S, KR 138S, KR 158FS, KR212, KR 238S, KR 262ES, KR 138D, KR 158D, KR238T, KR 238M, KR238A, KR238J, KR262A, LICA 38J, KR 55, LICA 01, LICA 09, LICA 12, LICA 38, LICA 44, LICA 97, LICA 99, KR OPPR, KR OPP2 von Kenrich Petrochemicals oder Tyzor ® ET, TPT, NPT, BTM, AA, AA-75, AA-95, AA-105, TE, ETAM, OGT von DuPont. Bevorzugt gelten Ken-React® KR 7, KR 9S, KR 12, KR 26S, KR 38S, KR44, LICA 09, LICA 44, NZ 44, sowie Tyzor® ET, TPT, NPT, BTM, AA, AA-75, AA-95, AA-105, TE, ETAM von DuPont.

Besonders bevorzugt sind Organo-Titanverbindungen mit über eine Sauerstoff-Titan-Bindung an das Titanatom gebundenen Substituenten der Formeln (IV) und/oder (V).

Die mindestens eine hydrolysierbare Haftvermittlersubstanz kann weiterhin eine Organo-Zirkoniumverbindung sein. Grundsätzlich sind alle dem Fachmann bekannten Organo-Zirkoniumverbindungen, welche als Haftvermittler eingesetzt werden, geeignet. Insbesondere geeignet ist eine Organo-Zirkoniumverbindung, welche mindestens eine funktionelle Gruppe trägt, welche ausgewählt ist aus der Gruppe bestehend aus Alkoxygruppe, Sulfonatgruppe, Carboxylatgruppe und Phosphatgruppe oder Mischungen davon, und welche über ein Sauerstoff-Zirkonium-Bindung direkt an ein Zirkoniumatom gebunden ist.

Als Alkoxygruppen haben sich insbesondere Isopropoxy- und sogenannte Neoalkoxy-Substituenten, insbesondere der Formel (IV) wie oben beschrieben, als besonders geeignet erwiesen, wobei die gestrichelte Bindung hierbei die Sauerstoff-Zirkonium-Bindung anzeigt.

Als Sulfonsäuren haben sich insbesondere aromatische Sulfonsäuren, deren Aromaten mit einer Alkylgruppe substituiert sind, als besonders geeignet erwiesen. Als bevorzugte Sulfonsäuren gelten Reste der folgenden Formel (V) wie oben beschrieben, wobei die gestrichelte Bindung hierbei die Sauerstoff-Zirkonium-Bindung anzeigt.

Als Carboxylatgruppen haben sich insbesondere Carboxylate von Fettsäuren als besonders geeignet erwiesen. Als bevorzugte Carboxylate gelten Stearate und Isostearate.

Organo-Zirkoniumverbindungen sind kommerziell erhältlich, beispielsweise bei der Firma Kenrich Petrochemicals. Beispiele für geeignete Organo-Zirkoniumverbindungen sind beispielsweise Ken-React® NZ 38J, NZ TPPJ, KZ OPPR, KZ TPP, NZ 01, NZ 09, NZ 12, NZ38, NZ 44, NZ 97.

Weiterhin kann die Haftvermittlersubstanz der erfindungsgemässen Zusammensetzung Mischungen von mindestens einer Organo-Siliziumverbindung mit mindestens einer Organo-Titanverbindung und/oder mit mindestens einer Organo-Zirkoniumverbindung enthalten. Ebenso sind Mischungen von mindestens einer Organo-Titanverbindung mit mindestens einer Organo-Zirkoniumverbindung möglich. Bevorzugt sind Mischungen von mindestens einer Organo-Siliziumverbindung mit mindestens einer Organo-Titanverbindung.

Besonders bevorzugt sind Mischungen von mehreren Organo-Siliziumverbindungen oder Mischungen von einer Organo-Siliziumverbindung mit einer Organo-Titanverbindung bzw. Organo-Zirkoniumverbindung.

Insbesondere bevorzugt sind Mischungen von Aminosilan(en) und Mercaptosilan(en).

Insbesondere als vorteilhaft haben sich Mischungen aus mindestens einem Polyaminosilan mindestens einem Polysilan, insbesondere mindestens einem Disilan, und mindestens einem Mercaptosilan gezeigt.

Eine derartige Mischung ist insbesondere eine Mischung aus:
A: Polyaminosilan, bevorzugt N-(2-Aminoethyl)-3-aminopropyltrimethoxysilan,
B: Polysilan, bevorzugt Bis-(3-trimethoxysilylpropyl)amin, und
C: Mercaptosilan, bevorzugt 3-Mercaptopropyltrimethoxysilan,
   wobei das Gewichtsverhältnis von A:B:C insbesondere X:Y:Z beträgt, mit den Werten X von 0.1 bis 10, Y von 0.1 bis 10 und Z von 0.1 bis 10.

Gemäss dem Verfahren der vorliegenden Erfindung kann die Haftvermittlersubstanz erwärmt werden, um deren Verdampfung zu beschleunigen. Wird im erfindungsgemässen Verfahren eine Organo-Siliziumverbindungen, eine Organo-Titanverbindungen oder Organo-Zirkoniumverbindungen als Haftvermittlersubstanz verwendet, so wird vorzugsweise eine Verdampfungstemperatur von 100 bis 250 °C eingestellt. Diese liegt somit weit unterhalb des Zersetzungspunkts der Haftvermittlersubstanz.

Unter dem Begriff "Trägergas" wird im Zusammenhang mit der vorliegenden Erfindung ein bezüglich der Haftvermittlersubstanz inertes Gas verstanden. Als bevorzugte Trägergase können etwa Stickstoff, Sauerstoff, Luft und/oder ein Edelgas verwendet werden. Insbesondere bei der Verwendung von Organo-Siliziumverbindungen, Organo-Titanverbindungen oder Organo-Zirkoniumverbindungen kann dem Trägergas zudem eine weitere Komponente zur Hydrolyse der besagten Verbindung zugesetzt werden. Wird beispielsweise Luft verwendet, so kann diese zusätzlich eine gewisse Menge an Feuchtigkeit, insbesondere Wasser, enthalten. Dabei beträgt die Luftfeuchtigkeit bei 20°C vorzugsweise zwischen 20 und 70%. Die Menge des Wassers ist bevorzugt so bemessen, dass die Haftvermittlersubstanz hydrolysieren oder teilhydrolysieren kann, bis sie auf das Substrat auftrifft. Weiter ist denkbar, das Trägergas zu erwärmen, um dadurch indirekt die Haftvermittlersubstanz zu erwärmen und deren Verdampfung zu beschleunigen.

Obschon es ein Vorteil der vorliegenden Erfindung ist, dass selbst in Abwesenheit eines Lösungsmittels eine homogene und ausreichende Benetzung der Substratoberfläche erzielt wird, sind von der vorliegenden Erfindung auch Verfahren mit umfasst, in denen die Haftvermittlersubstanz in einem Lösungsmittel gelöst vorgelegt wird.

Dabei eignen sich als Lösungsmittel insbesondere leicht flüchtige Lösungsmittel, das heisst solche mit einem Siedepunkt bei 760 Torr von zwischen 25°C und 140°C, insbesondere von zwischen 50°C und 120°C, bevorzugt von zwischen 65 und 99°C.

Weiter eignen sich auch weniger flüchtige Lösungsmittel, das heisst solche Lösungsmittel, welche einen Siedepunkt bei 760 Torr über der Einbrenntemperatur aufweisen. Insbesondere weisen sie einen Siedepunkt von ≥ 100°C, vorzugsweise zwischen 100°C und 200°C, bevorzugt zwischen 140°C und 200°C, auf.

Weiterhin hat es sich gezeigt, dass insbesondere Mischungen verschiedener Lösungsmittel verwendet werden können. Beispielsweise können Mischungen von Kohlenwasserstoffen untereinander oder Mischungen mindestens eines Kohlenwasserstoffes mit mindestens einem polaren Lösungsmittel, welches mindestens ein Heteroatom in seiner Strukturformel aufweist, verwendet werden. Der Kohlenwasserstoff kann gesättigt oder olefinisch oder aromatisch ungesättigt sein. Bevorzugt ist der Kohlenwasserstoff gesättigt. Als Heteroatom im polaren Lösungsmittel sind insbesondere O, N und S als geeignet zu betrachten. Bevorzugt ist das mindestens eine Heteroatom ein Sauerstoffatom, was besonders bevorzugt in Form von Hydroxyl-, Carbonyl-, Ether-, Carbonsäure- oder Carbonsäurederivat-Gruppen, wie beispielsweise Ester-, Amid- oder Carboxylat-Gruppe, in der Strukturformel des polaren Lösungsmittel vorliegt. Bevorzugte polare Lösungsmittel sind Wasser, Alkohole und Ketone. Meist bevorzugte polare Lösungsmittel sind Alkohole, insbesondere gesättigte, verzweigte oder lineare oder cyclische Alkohole mit 1 bis 8 Kohlenstoffatomen.

Bevorzugt als Lösungsmittel sind Alkohole und aliphatische und cycloaliphatische Kohlenwasserstoffe, insbesondere Ethanol, Isopropanol, Hexan, Cyclohexan, Heptan oder Octan, sowie deren Mischungen. Bevorzugt ist das Lösungsmittel Isopropanol oder Heptan.

Als besonders bevorzugt gelten Lösungsmittelgemische eines Alkohols und eines aliphatischen oder cycloaliphatischen Kohlenwasserstoffes, insbesondere solche von Ethanol oder Isopropanol mit Hexan oder Cyclohexan oder Heptan oder Octan, sowie deren Mischungen. Als besonders bevorzugte Lösungsmittelmischung hat sich die Mischung von Isopropanol und Heptan gezeigt.

Als weniger flüchtige Lösungsmittel gelten insbesondere Kohlenwasserstoffe wie Toluol, Xylol oder einer Kohlenwasserstoffmischung mit einem Siedepunkt zwischen 120°C und 200°C, insbesondere zwischen 120°C und 140°C.

Die auf das Substrat aufgebrachte Haftvermittlerzusammensetzung kann aus der Haftvermittlersubstanz bestehen oder mindestens einen weiteren Bestandteil umfassen. Bevorzugt beträgt der Anteil an Haftvermittlersubstanz 90 Gewichts-%, insbesondere 95 Gewichts-%, bevorzugt 99 Gewichts-%, bezogen auf die Haftvermittlerzusammensetzung.

Der mindestens eine weitere Bestandteil kann je nach Eignung wie die Haftvermittlersubstanz oder aber durch ein konventionelles Verfahren aufgebracht werden, das für die Zwecke geeignet ist.

Ebenfalls als Bestandteil der Haftvermittlerzusammensetzung verwendet werden können Katalysatoren für die Hydrolyse z.B. von Silangruppen, und zwar beispielsweise in der Form von organischen Carbonsäuren wie Benzoesäure oder Salicylsäure, organischen Carbonsäureanhydriden wie Phthalsäureanhydrid oder Hexahydrophthalsäureanhydrid, Silylester organischer Carbonsäuren, organische Sulfonsäuren wie p-Toluolsulfonsäure oder 4-Dodecylbenzolsulfonsäure oder Methylsulfonsäure, oder andere organische oder anorganische Säuren, oder Mischungen der vorgenannten Säuren; sowie Katalysatoren für die Reaktion von Isocyanatgruppen, beispielsweise Zinnverbindungen wie Zinn(II)-octoat, Monobutylzinntrichlorid, Dibutylzinndichlorid, Dibutylzinnoxid, Dibutylzinndiacetat, Dibutylzinndilaurat, Dibutylzinndiacetylacetonat, Dibutylzinndicarboxylate, Dioctylzinndicarboxylate, Alkylzinnthioester, Bismutverbindungen wie Bismut(III)-octoat, Bismut(III)-neodecanoat, Zinkverbindungen wie Zink(II)-octoat, sowie aminogruppenhaltige Verbindungen wie beispielsweise 2,2'-Dimorpholinodiethylether, 1,4-Diazabicyclo[2.2.2]octan, 1,8-Diazabicyclo[5.4.0]undec-7-en, sowie weitere Katalysatoren wie Titanate und Zirkonate.

Weiterhin können in der Primerchemie übliche Netzmittel und Additive eingesetzt werden.

Als weitere Bestandteile ebenfalls geeignet sind UV-Absorber sowie optische Aufheller. Solche optischen Aufheller absorbieren UV-Licht und emittieren sichtbares, normalerweise blaues Licht. Ein bevorzugter optischer Aufheller stellt Ciba Uvitex® OB von Ciba Speciality Chemicals dar. Weitere geeignete Aufheller sind beispielsweise in Kirk-Othmer, "Encyclopedia of Chemical Technology", 4th Ed., John Wiley & Sons, New York, Vol. 11, S. 227-241 angegeben. Die UV-Absorber können beispielsweise organischer Natur sein, wie beispielsweise solche aus der Tinuvin®-Produktelinie von Ciba Speciality Chemicals.

Das Substrat, auf dessen Oberfläche die Haftvermittlerzusammensetzung aufgetragen wird, kann sehr unterschiedlich sein. Besonders geeignet sind anorganische Substrate wie Glas, Glaskeramik, Beton, Mörtel, Backstein, Ziegel, Gips und Natursteine wie Granit oder Marmor; Metalle oder Legierungen wie Aluminium, Stahl, Buntmetalle, verzinkte Metalle; organische Substrate wie Holz, Spanplatten, Kunststoffe wie PVC, Polycarbonate, PMMA, Polyester, Epoxidharze; beschichtete Substrate wie pulverbeschichtete Metalle oder Legierungen; sowie Farben und Lacke, insbesondere Automobildecklacke. Als meist bevorzugte Substrate gelten Glas, insbesondere mit Keramik beschichtetes Glas, lackierte Untergründe, wie lackierte Metallflansche, sowie Kunststoffe, insbesondere PVC.

Die vorliegende Erfindung kann insbesondere bei der Vorbehandlung von Substratoberflächen, welche anschliessend mit einem Kleb- oder Dichtstoff verbunden werden sollen, eingesetzt werden. Als Vorbehandlung wird dabei vorzugsweise eine Haftvermittlersubstanz mittels des vorgängig beschriebenen Verfahrens aufgetragen. Geeignete Anwendungen sind daher beispielsweise das Verkleben von Bauteilen im Hoch- oder Tiefbau und bei der Fertigung oder Reparatur von industriellen Gütern oder Konsumgütern, insbesondere von Fenstern, Haushaltmaschinen oder Transportmitteln wie Fahrzeugen zu Wasser oder zu Lande, bevorzugt Automobile, Busse, Lastkraftwagen, Züge oder Schiffe; das Abdichten von Fugen, Nähten oder Hohlräumen in der industriellen Fertigung oder Reparatur, oder im Hoch- oder Tiefbau. Besonders geeignet ist die vorliegende Erfindung beim Aufbringen einer Haftvermittlerzusammensetzung auf eine Scheibe, vorzugsweise aus Glas, wo die Scheibe mit mindestens einem weiteren Substrat aus Glas, Holz, Lack, oder Kunststoff, insbesondere Polyvinylchlorid (PVC) verbunden, insbesondere verklebt, werden soll. Somit kann das erfindungsgemässe Verfahren vorzugsweise im Fahrzeugbau, wo Glas mit einer mit Lack beschichteten Karosserie verklebt wird, oder im Tür- oder Fensterbau, wo Glas mit einem Rahmen aus Holz oder Kunststoff verklebt wird, eingesetzt werden.

Des weiteren betrifft die Erfindung ein Verfahren zum Verkleben und/oder Abdichten von mindestens zwei Substratoberflächen **S1** und **S2** umfassend die Schritte: (i) Aufbringen einer Haftvermittlerzusammensetzung mittels des vorgängig beschriebenen Verfahrens auf ein Substrat **S1** und/oder ein Substrat **S2;** (ii) Applizieren eines Kleb- oder Dichtstoffes auf mindestens eine Substratoberfläche **S1** und/oder **S2** oder zwischen die Substrate **S1** und **S2;** (iii) Kontaktieren der Substrate **S1** und **S2** über den applizierten Kleb- oder Dichtstoff; und; (iv) Aushärten des applizierten Kleb- oder Dichtstoffes; wobei die Substrate **S1** und **S2** gleich oder verschieden voneinander sind.

In der Anwendung als Dichtstoff wird die Zusammensetzung zwischen die Substrate **S1** und **S2** appliziert und anschliessend erfolgt die Aushärtung. Üblicherweise wird der Dichtstoff in eine Fuge eingepresst.

Die Applikation des Kleb- oder Dichtstoffes erfolgt vorzugsweise gleichmässig.

In beiden Anwendungen kann das Substrat **S1** gleich oder verschieden von Substrat S2 sein.

Geeignete Substrate **S1** oder **S2** sind beispielsweise anorganische Substrate wie Glas, Glaskeramik, Beton, Mörtel, Backstein, Ziegel, Gips und Natursteine wie Granit oder Marmor; Metalle oder Legierungen wie Aluminium, Stahl, Buntmetalle, verzinkte Metalle; organische Substrate wie Holz, Kunststoffe wie PVC, Polycarbonate, PMMA, Polyester, Epoxidharze; beschichtete Substrate wie pulverbeschichtete Metalle oder Legierungen; sowie Farben und Lacke, insbesondere Automobildecklacke.

Es hat sich gezeigt, dass sich Polyurethanklebstoffe, (Meth)acrylat-klebstoffe, Epoxidharzklebstoffe oder Klebstoffe auf Basis von Alkoxysilan-funktionellen Prepolymeren bestens für eine Verklebung eignen.

Als Polyurethanklebstoffe sind einerseits einkomponentige feuchtigkeitshärtende Klebstoffe oder zweikomponentige Polyurethanklebstoffe geeignet. Derartige Klebstoffe enthalten Polyisocyanate, insbesondere in Form von Isocyanat-Gruppen aufweisenden Prepolymeren. Bevorzugt werden Polyurethanklebstoffe, wie sie von Sika Schweiz AG unter den Produktelinien Sikaflex®, SikaPower® und SikaForce® kommerziell verkauft werden.

Als (Meth)acrylatklebstoffe sind zweikomponentige Klebstoffe zu verstehen, deren erste Komponente Acrylsäure und/oder Methacrylsäure und/oder deren Ester umfasst, und deren zweite Komponente ein Radikalbildner, insbesondere ein Peroxid, umfasst. Bevorzugte derartige Klebstoffe sind unter der Produktelinie SikaFast® kommerziell von Sika Schweiz AG erhältlich.

Als Epoxidharzklebstoffe werden Klebstoffe verstanden, welche auf Basis von Glycidylethern, insbesondere von Diglycidylether von Bisphenol-A und/oder Bisphenol-F, formuliert sind. Besonderes geeignet sind zweikomponentige Epoxidharzklebstoffe, deren eine Komponente Diglycidylether von Bisphenol-A und/oder Bisphenol-F enthalten und deren zweite Komponente Polyamine und/oder Polymerkaptane enthalten. Bevorzugt werden zweikomponentige Epoxidharzklebstoffe, wie sie unter der Produktelinie Sikadur® kommerziell von Sika Schweiz AG erhältlich sind. Als besonders geeignet zum Verkleben von Folien haben sich die zweikomponentigen Epoxidharzklebstoffe Sikadur®-Combiflex®, Sikadur®-31, Sikadur®-31DW und Sikadur®-33, bevorzugt Sikadur®-Combiflex®, von Sika Schweiz AG gezeigt.

Als Klebstoffe auf Basis von Alkoxysilan-funktionellen Prepolymeren werden insbesondere Klebstoffe auf Basis von MS-Polymeren oder SPUR (Silane terminated Polyurethanes)-Prepolymeren verstanden. Derartige Alkoxysilan-funktionelle Prepolymere lassen sich beispielsweise über eine Hydrosilyierungsreaktion aus mindestens zwei C=C-Doppelbindung aufweisenden Polyether, insbesondere aus allylterminierten Polyoxyalkylenpolymeren, und mit einem Hydrosilan oder über eine Additionsreaktion von Isocyanatoalkylalkoxysilanen an Polyole oder an Hydroxy-funktionelle Polyurethanprepolymere oder über eine Additionsreaktion von Aminoalkylalkoxysilanen an Isocyanat-funktionelle Polyurethanprepolymere herstellen, wobei die Polyurethanprepolymere ihrerseits über eine Reaktion von Polyisocyanaten und Polyolen und/oder Polyaminen in bekannter Art und Weise zugänglich sind. Klebstoffe auf Basis von Alkoxysilan-funktionellen Prepolymeren sind feuchtigkeitshärtend und reagieren bei Raumtemperatur.

Grundsätzlich können auch reaktive Heissschmelzklebstoffe eingesetzt werden, wie sie von Sika Schweiz AG unter der Produktelinie SikaMelt® kommerziell verkauft werden. Bevorzugt werden jedoch raumtemperaturhärtende Klebstoffe.

Die Substrate können bei Bedarf vor dem Applizieren des Kleb- oder Dichtstoffes zusätzlich zum Aufbringen der Haftvermittlerzusammensetzung vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln.

Nach dem Verkleben oder Abdichten der Substrate **S1** und **S2** wird ein verklebter oder abgedichteter Artikel erhalten. Ein derartiger Artikel kann ein Bauwerk, insbesondere ein Bauwerk des Hoch- oder Tiefbaus, oder ein Transportmittel sein. Bevorzugt ist der Artikel ein Transportmittel, beispielsweise ein Fahrzeug zu Wasser oder zu Lande, insbesondere ein Automobil, ein Bus, ein Lastkraftwagen, ein Zug oder ein Schiff, oder ein Anbauteil davon. Besonders bevorzugt ist der verklebte oder abgedichtete Artikel ein Transportmittel, insbesondere ein Automobil, oder ein Anbauteil eines Transportmittels, insbesondere eines Automobils.

Die vorliegende Erfindung betrifft weiter eine Vorrichtung zur Durchführung des oben beschriebenen Verfahrens umfassend einen Block mit einem durch diesen hindurchführenden Trägergaskanal und Mitteln zum Zuführen der Haftvermittlersubstanz in den Trägergaskanal. Der Block umfasst einen einen Trägergaseinlass aufweisenden und eine Einlassseite definierenden ersten Flächenabschnitt und einen einen Trägergasauslass aufweisenden und eine Auslassseite definierenden zweiten Flächenabschnitt. Der Block kann jede beliebige für die Zwecke geeignete Form aufweisen, beispielsweise diejenige eines Quaders oder Zylinders.

Vom Trägergaseinlass zum Trägergasauslass führt der Trägergaskanal durch den Block hindurch. Der Trägergaskanal kann betreffend Querschnitt und Verlauf prinzipiell jede für die Zwecke geeignete Ausgestaltung haben. Bei einem quader- oder zylinderförmigen Block, bei dem die Einlassseite rechtwinklig zur Auslassseite steht, ist beispielsweise denkbar, dass der Trägergaskanal direkt (und somit schräg) oder in zwei rechtwinklig zueinander stehenden Trägergaskanalabschnitten durch den Block hindurchführt.

Im Allgemeinen ist der Trägergaseinlass mit Mitteln zum Anschliessen einer Trägergaszuführung, beispielsweise einem Einlassstutzen, verbunden. Zudem kann der Trägergasauslass mit Mitteln zum gezielten Auftragen der Haftvermittlersubstanz verbunden sein, etwa mit einem vom Block abstehenden Rohrabschnitt, insbesondere mit einer Düse oder Glocke. Denkbar ist etwa, dass zwischen der Düse und dem Trägergasauslass ein Schlauch angeordnet ist. Dieser erlaubt es aufgrund seiner Flexibilität, die Düse wunschgemäss auszurichten, ohne dass der Block bewegt werden müsste. So könnte das Verfahren auf einem ruhenden Substrat durch Bewegen, beispielsweise unter Benutzung eines Roboters, der Düse über dem zu behandelnden Substrat erfolgen, was praktisch sehr vorteilhaft ist.

Die Vorrichtung weist überdies Mittel zum Zuführen der Haftvermittlersubstanz in den Trägergaskanal auf. Diese sind in der Regel durch einen in den Trägergaskanal mündenden Haftvermittlersubstanzkanal hindurchgeführt, welcher im Allgemeinen mit einem Septum verschlossen ist.

Vorzugsweise ist der Trägergaskanal derart ausgestaltet, dass ein möglichst guter Kontakt zwischen Haftvermittlersubstanz und dem Trägergas gewährleistet wird. Zu diesem Zweck können im Trägergaskanal Mittel vorgesehen sein, die dazu bestimmt sind, mit Haftvermittlersubstanz benetzt zu werden und dadurch eine möglichst grosse Haftvermittlersubstanzoberfläche zu gewährleisten. Weiter können im Sinne eines möglichst guten Kontakts zwischen Trägergas und Haftvermittlersubstanz Mittel im Trägergaskanal vorgesehen sein, die Turbulenzen in den durch den Trägergaskanal strömenden Gasstrom einführen.

Gemäss einer weiteren bevorzugten Ausführungsform sind der Vorrichtung überdies Mittel zur Erwärmung des Blocks zugeordnet. Dabei kommen alle dem Fachmann bekannten Mittel in Frage. Denkbar ist etwa, dass der Block auf einer Heizplatte angeordnet ist oder eine Heizwendel als integralen Bestandteil umfasst. Weiter kann die Erwärmung auch ohne direkten Kontakt zum Block erfolgen, beispielsweise über Induktion. Um eine gute Wärmeübertragung vom Block auf die Haftvermittlersubstanz zu gewährleisten, ist der Block vorzugsweise aus einem Material mit einem hohen Wärmeleitungskoeffizienten gefertigt, beispielsweise Aluminium.

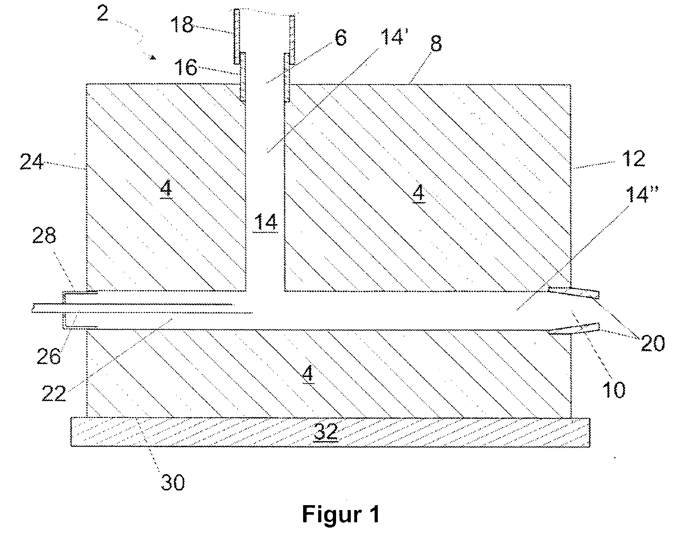

Eine rein schematische Querschnittdarstellung einer Ausführungsform der beschriebenen Vorrichtung ist in der angefügten Fig. 1 gezeigt.

Gemäss Fig. 1 umfasst die Vorrichtung 2 einen quaderförmigen Block 4 mit einer einen Trägergaseinlass 6 aufweisenden und eine Einlassseite definierenden Oberseite 8 und einer rechtwinklig zur Einlassseite stehenden, einen Trägergasauslass 10 aufweisenden Auslassseite 12. Vom Trägergaseinlass 6 zum Trägergasauslass 10 führt ein Trägergaskanal 14 durch den Block 4 hindurch. Der Trägergaskanal 14 weist einlassseitig einen ersten, im Wesentlichen vertikal verlaufenden Trägergaskanalabschnitt 14' und auslassseitig einen zweiten, im Wesentlichen horizontal verlaufenden Trägergaskanalabschnitt 14" auf. Der Trägergaseinlass 6 ist mit einem Einlassstutzen 16 zum Anschliessen einer Trägergaszuführung 18 strömungsverbunden, während der Trägergasauslass 10 mit einer im Wesentlichen rechtwinklig von der Auslassseite 12 abstehenden Düse 20 strömungsverbunden ist.

Der Block umfasst zudem einen Haftvermittlersubstanzkanal 22. Dieser führt von der der Auslassseite 12 gegenüberliegenden Seite 24 des Blocks 4 in den Trägergaskanal 14. Dabei verläuft der Haftvermittlersubstanzkanal 22 in der Verlängerung des zweiten Trägergaskanalabschnitts 14", sodass der Trägergaskanal 14 und der Haftvermittlersubstanzkanal 22 im Profil im Wesentlichen eine umgekehrte T-Form bilden.

Die Vorrichtung weist weiter Mittel zur Einführung der Haftvermittlersubstanz in den Trägergaskanal 14 auf. Diese liegen gemäss Fig. 1 in Form einer durch den Haftvermittlersubstanzkanal 22 hindurchgeführten Kanüle 26 vor. Der Haftvermittlersubstanzkanal 22 ist dabei mittels eines Septums 28 verschlossen.

Um eine möglichst grosse Oberfläche der in den Trägergaskanal 14 eingeführten Haftvermittlersubstanz und somit eine möglichst grosse Kontaktfläche zwischen Haftvermittlersubstanz und Trägergas zu gewährleisten, wird in den zweiten Trägergaskanalabschnitt 14" beispielsweise Glaswolle eingeführt (nicht gezeigt), die mit der Haftvermittlersubstanz benetzt wird. Die Glaswolle bewirkt überdies, dass in den Trägergasstrom Turbulenzen eingeführt werden, die den Kontakt zwischen Trägergas und Haftvermittlersubstanz zusätzlich verbessern.

Mit seiner Unterseite 30 liegt der Block 4 auf einer Heizplatte 32 auf, die dazu bestimmt ist, den Block 4 und somit die in den Trägergaskanal 14 eingeführte Haftvermittlersubstanz zu erwärmen.

Das Trägergas wird über die Trägergaszuführung 18 und den an diesen angeschlossenen Einlassstutzen 16 in den Trägergaskanal 14 des mittels der Heizplatte 32 erwärmten Blocks 4 geleitet und die Haftvermittlersubstanz wird mittels der Kanüle 26 über den Haftvermittlersubstanzkanal 22 in den Trägergaskanal 14 eingeführt und verdampft. Der gebildete Dampf der Haftvermittlersubstanz wird mittels des Trägergases in Richtung zur Auslassseite 12 hin transportiert und über die Düse 20 auf ein Substrat aufgebracht.

Nebst dem in Fig. 1 gezeigten Verlauf des Trägergaskanals ist insbesondere auch denkbar, dass der Trägergaskanal von der Einlassseite zur Auslassseite schräg nach unten verläuft. Dies kann vor allem dann von Vorteil sein, wenn im Block ein Temperaturgradient vorliegt, der mit abnehmender Entfernung von der Heizplatte zunimmt. Dadurch, dass in einer solchen Ausführungsform die flüssige Haftvermittlersubstanz im Trägergaskanal kontinuierlich nach unten fliesst, wird deren Dampfdruck in Richtung zum Trägergasauslass - und damit in Richtung zunehmender Konzentration an gasförmiger Haftvermittlersubstanz - kontinuierlich erhöht.

Weiter ist denkbar, dass im Trägergaskanal eine Vertiefung vorliegt, die als Senke für die Haftvermittlersubstanz fungiert. Auch diese ist vorzugsweise in dem Sinne ausgestaltet, dass die Oberfläche der Haftvermittlersubstanz und somit die Kontaktfläche zwischen dem Trägergas und der Haftvermittlersubstanz möglichst gross ist.

Ein Ausführungsbeispiel unter Verwendung der in Fig. 1 gezeigten Vorrichtung wird im Folgenden ausgeführt. Selbstverständlich ist die Erfindung nicht auf das gezeigte und beschriebene Ausführungsbeispiel beschränkt. Es versteht sich, dass die vorstehend genannten Merkmale der Erfindung nicht nur in der jeweils angegebenen Kombination, sondern auch in anderen Modifikationen, Kombinationen und Abänderungen oder in Alleinstellung verwendbar sind, ohne den Rahmen der Erfindung zu verlassen.

### Beispiele

### Aufbringen einer Haftvermittlerzusammensetzunq auf ein Substrat

Ein in Fig. 1 gezeigter Block aus Aluminium mit einer Höhe von ca. 15 cm wurde auf 150°C erwärmt. Durch einen durch den Block hindurchführenden Trägergaskanal mit einer Querschnittsfläche von ca. 12.5 mm² wurde ein Stickstoffgas mit einem Gasfluss von 1,5 bis 2 l/min geleitet. Zu einem Zeitpunkt t₁₀ₛ, bzw. t₁ₘᵢₙ bzw. t₄ₘᵢₙ wurde nach 10 Sekunden, bzw. 1 Minute, bzw. 4 Minuten nach Injektion (Spritze, Edelstahlkanüle) der Zusammensetzung ***1*** bzw. ***2*** gemäss Tabelle 1 in den Trägergaskanal ein Probesubstrat aus Flachglas (Zinnseite) in vorgegebenem Abstand zum Trägergasauslass, bzw. von der mit diesem verbundenen Düse, positioniert und quer zur Ausströmungsrichtung bewegt.

Das Glas wurde mit dem die Haftvermittlersubstanz mitführenden Trägergas bedampft, wobei ersteres mit einer Geschwindigkeit von 10 cm/Sekunde und in einem Abstand von ca. 5 bis 6 cm entlang des Trägergasauslasses, bzw. der Düse, bewegt wurde.

Daraufhin wurde nach einer Wartezeit von 10 Minuten ein kommerziell erhältlicher einkomponentiger feuchtigkeitshärtender Polyurethan-Klebstoff (Sikaflex® 250-DM-2, erhältlich von Sika Schweiz AG) kalt (25°C) aufgetragen.

**Tabelle 1. Haftvermittlerzusammensetzungen. Angaben in Gewichtsteilen.**

| | ***1*** | ***2*** |
|---|---|---|
| N-(2-Aminoethyl)-3-aminopropyltrimethoxysilan | 1.5 | 1.5 |
| Bis-(3-trimethoxysilylpropyl)amin | 1.5 | 1.5 |
| 3-Mercaptopropyltrimethoxysilan | 1 | 1 |
| n-Butyltitanat | | 1 |

Anschliessend wurde der Klebstoff während 7 Tagen bei 23 °C und 50% relativer Luftfeuchtigkeit (Raumtemperatur-Klimalagerung: "KL") ausgehärtet und es wurde ein Drittel der Raupe mittels unten beschriebenen Haftungstest getestet. Danach wurde die Probe während weiteren 7 Tagen ins Wasser bei 23 °C gelegt (Wasserlagerung: "WL"). Anschliessend wurde die Haftung durch den Raupentest für ein weiteres Drittel der Raupe getestet. Daraufhin wurden die Substrate einem Cataplasmaklima von 100% relativer Luftfeuchtigkeit und 70 °C ("CP"), ausgesetzt und danach die Haftung des letzten Drittels der Raupe ermittelt.

Beim 'Raupentest' wird am Ende der Raupe diese knapp über der Klebefläche eingeschnitten. Das eingeschnittene Ende der Raupe wird mit einer Rundzange festgehalten und vom Untergrund gezogen. Dies geschieht durch vorsichtiges Aufrollen der Raupe auf die Zangenspitze, sowie durch Plazieren eines Schnittes bis auf den blanken Untergrund senkrecht zur Raupenziehrichtung. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebestoff (Kohäsionsbruch). Die Bewertung der Hafteigenschaften erfolgt durch Abschätzen des kohäsiven Anteils der Haftfläche:
1 = > 95% Kohäsionsbruch
2 = 75 - 95% Kohäsionsbruch
3 = 25 - 75% Kohäsionsbruch
4 = < 25% Kohäsionsbruch
5 = 0% Kohäsionsbruch (rein adhäsiver Bruch).

Zu Vergleichszwecken wurde eine Zusammensetzung bestehend aus 5 Teilen Zusammensetzung ***1*** und 95 Teilen Isopropanol, sowie Sika Aktivator®, erhältlich von Sika Schweiz AG), als Haftvermittlerzusammensetzung konventionell durch ein "wipe on/off"-Verfahren als ***Ref.1*** bzw. ***Ref*.2** aufgetragen. Beim "wipe on/off"-Verfahren wird ein Wischtuch (Tela^{®}, Tela-Kimberly Switzerland GmbH) mit der Haftvermittlerzusammensetzung getränkt und durch Entlangwischen auf der Oberfläche des Glases appliziert ("Wipe on"). Unmittelbar nach diesem Auftrag wurde ein trockenes Wischtuch über diese Stelle bewegt, wodurch überschüssige Haftvermittlerzusammensetzung entfernt wird ("Wipe off"). Nach einer Wartezeit von 10 Minuten wurde, wie beschrieben, der Klebstoff appliziert und getestet.

Schliesslich wurde als weiterer Vergleich als ***Ref.3*** der Klebstoff auf ein unbehandeltes Glas appliziert und wie beschrieben getestet.

Die erhaltenen Resultate sind in Tabelle 2 wiedergegeben.

**Tabelle 2. Haftresultate von nach konventioneller und erfindungsgemässer Art aufgetragener Haftvermittlerzusammensetzungen.**

| | ***1*** | | | ***2*** | | | ***Ref.1*** | | | ***Ref.2*** | | | ***Ref.3*** | | |
|---|---|---|---|---|---|---|---|---|---|---|---|---|---|---|---|
| | KL | WL | CP | KL | WL | CP | KL | WL | CP | KL | WL | CP | KL | WL | CP |
| ohne | | | | | | | | | | | | | 5 | 5 | 5 |
| konventionel | | | | | | | 5 | 3 | 1 | 5 | 4 | 3 | | | |
| | | | | | | | | | | | | | | | |
| t₁₀ₛ | 3 | 4 | 5 | 2 | 4 | 5 | | | | | | | | | |
| t₁ₘᵢₙ | 1 | 1 | 4 | 1 | 3 | 4 | | | | | | | | | |
| t₄ₘᵢₙ | 2 | 2 | 1 | 1 | 1 | 2 | | | | | | | | | |

Gemäss Tabelle 2 wurde ohne Vorbehandlung des Substrats **(*Ref.3*)** keine ausreichende Adhäsion erreicht; alle Proben zeigen 0% an kohäsivem Bruch. Wie aus Tabelle 2 weiter ersichtlich ist, wurde bei einer konventionellen Vorbehandlung mit "wipe on/off"-Verfahren für die Raumtemperatur-Klimalagerung und in Wasser gelagerten Proben ungenügende Resultate erhalten.

In einer entsprechenden Mess-Serie wurde bei der Zusammensetzung ***2*** die Temperatur des Blocks variiert. Der Abstand betrug 5-6 cm. Die Zeit nach Injektion betrug 1 Minute. Die Ergebnisse sind in Tabelle 3 aufgeführt.

**Tabelle 3. Haftresultate bei unterschiedlichen Blocktemperaturen.**

| Temperatur des Blocks | KL | WL | CP |
|---|---|---|---|
| 120°C | 1 | 4 | 5 |
| 150°C | 1 | 3 | 4 |

In einer weiteren Mess-Serie wurde bei einer Blocktemperatur von 150°C der Zusammensetzung 2der Abstand zwischen dem Trägergasauslass, bzw. der mit diesem strömungsverbundenen Düse, und dem Substrat verändert. Die Zeit nach Injektion betrug hierbei 4 Minuten. Unter den oben genannten Bedingungen wurden für die Zusammensetzung ***2*** bei einem Abstand von 5 - 6 cm tendenziell die besten Resultate erhalten. Die Resultate sind in Tabelle 4 zusammengestellt.

**Tabelle 4. Haftresultate bei unterschiedlichem Abstand.**

| Abstand | KL | WL | CP |
|---|---|---|---|
| 2 - 3 cm | 1 | 4 | 4 |
| 5 - 6 cm | 1 | 1 | 2 |
| 10cm | 3 | 2 | 1 |

### Liste der Bezugszeichen

- 2:: Vorrichtung
- 4:: Block
- 6:: Trägergaseinlass
- 8:: Einlassseite
- 10:: Trägergasauslass
-
- 12:: Auslassseite
- 14:: Trägergaskanal
- 14':: erster Trägergaskanalabschnitt
- 14":: zweiter Trägergaskanal- abschnitt

- 16:: Einlassstutzen
- 18:: Trägergaszuführung
- 20:: Düse
- 22:: Haftvermittlersubstanzkanal
- 24:: der Auslassseite gegen- überliegende Seite
- 26:: Kanüle
- 28:: Septum
- 30:: Unterseite
- 32:: Heizplatte

## Patentansprüche

1. Verfahren zum Aufbringen einer mindestens eine Haftvermittlersubstanz enthaltenden Haftvermittlerzusammensetzung auf ein Substrat, wobei die Haftvermittlersubstanz verdampft wird und der gebildete Dampf mittels eines Trägergases zum Substrat transportiert wird.

2. Verfahren nach Anspruch 1, wobei die Verdampfung der Haftvermittlersubstanz durch Erwärmung auf eine Temperatur unterhalb ihres Zersetzungspunkts erfolgt.

3. Verfahren nach Anspruch 1 oder 2, wobei die Haftvermittlersubstanz im Wesentlichen frei von Lösungsmittel ist.

4. Verfahren nach einem der vorhergehenden Ansprüche, wobei die Haftvermittlersubstanz hydrolysierbar ist.

5. Verfahren nach einem der vorhergehenden Ansprüche, wobei die Haftvermittlersubstanz eine Organo-Siliziumverbindung, eine Organo-Titanverbindung und/oder eine Organo-Zirkoniumverbindung ist.

6. Verfahren nach Anspruch 5, wobei die Organo-Siliziumverbindung eine Verbindung der Formel (I) oder (II) oder (III) ist: 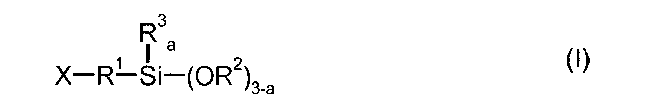 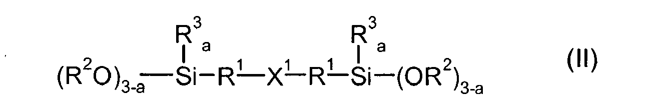 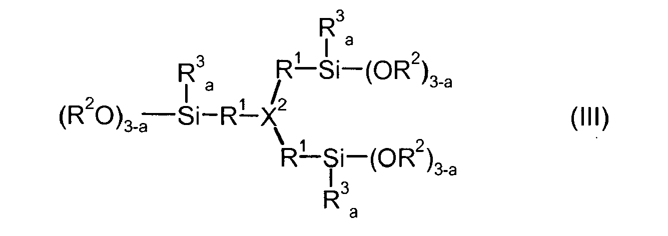 in der R¹ für eine lineare oder verzweigte, gegebenenfalls cyclische, Alkylengruppe mit 1 bis 20 C-Atomen steht, gegebenenfalls mit aromatischen Anteilen, und gegebenenfalls mit einem oder mehreren Heteroatomen, insbesondere Stickstoffatomen,
R² für eine Alkylgruppe mit 1 bis 5 C-Atomen, insbesondere für eine Methyl- oder Ethylgruppe, oder eine Acylgruppe steht,
R³ für eine Alkylgruppe mit 1 bis 8 C-Atomen steht, insbesondere eine Methylgruppe,
X für H oder eine funktionelle Gruppe steht, welche ausgewählt ist aus der Gruppe bestehend aus einer Oxirangruppe, OH-Gruppe, (Meth)acryloxygruppe, Aminogruppe, SH-Gruppe, Acylthiogruppe und Vinylgruppe, bevorzugt eine Aminogruppe,
X¹ für eine funktionelle Gruppe steht, welche ausgewählt ist aus der Gruppe bestehend aus NH, S, S₂ und S₄,
X² für eine funktionelle Gruppe steht, welche ausgewählt ist aus der Gruppe bestehend aus N und einer Isocyanurat-Gruppe, und
a für einen der Werte 0, 1 oder 2 steht, bevorzugt 0.

7. Verfahren nach einem der vorhergehenden Ansprüche, wobei der Anteil an Haftvermittlersubstanz 90 Gewichts-%, insbesondere 95 Gewichts-%, bevorzugt 99 Gewichts-%, bezogen auf die Haftvermittlerzusammensetzung beträgt.

8. Verfahren nach einem der vorhergehenden Ansprüche, wobei die Haftvermittlerzusammensetzung eine Mischung aus A: Polyaminosilan, bevorzugt N-(2-Aminoethyl)-3-aminopropyltrimethoxysilan,
B: Polysilan, bevorzugt Bis-(3-trimethoxysilylpropyl)amin, und
C: Mercaptosilan, bevorzugt 3-Mercaptopropyltrimethoxysilan,
enthält und das Gewichtsverhältnis von A:B:C insbesondere X:Y:Z beträgt, mit den Werten X von 0.1 bis 10, Y von 0.1 bis 10 und Z von 0.1 bis 10.

9. Verfahren nach einem der vorhergehenden Ansprüche, wobei das Trägergas bezüglich der Haftvermittlersubstanz inert ist.

10. Verfahren nach einem der vorhergehenden Ansprüche, wobei als Trägergas Stickstoff, Sauerstoff, Luft und/oder ein Edelgas verwendet wird.

11. Vorrichtung zur Durchführung des Verfahrens nach einem der vorhergehenden Ansprüche umfassend einen Block (4) mit einem durch diesen hindurchführenden Trägergaskanal (14) und Mitteln (26) zum Zuführen der Haftvermittlersubstanz in den Trägergaskanal.

12. Vorrichtung nach Anspruch 11, wobei dem Block (4) Mittel (32) zu dessen Erwärmung zugeordnet sind.

## Claims

1. Process for applying an adhesion promoter composition comprising at least one adhesion promoter substance to a substrate, wherein the adhesion promoter substance is evaporated and the vapour formed is transported to the substrate by means of a carrier gas.

2. Process according to Claim 1, wherein the adhesion promoter substance is evaporated by heating to a temperature below the decomposition point thereof.

3. Process according to Claim 1 or 2, wherein the adhesion promoter substance is essentially free of solvent.

4. Process according to any of the preceding claims, wherein the adhesion promoter substance is hydrolysable.

5. Process according to any of the preceding claims, wherein the adhesion promoter substance is an organosilicon compound, an organotitanium compound and/or an organozirconium compound.

6. Process according to Claim 5, wherein the organosilicon compound is a compound of the formula (I) or (II) or (III): 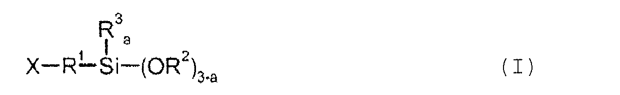 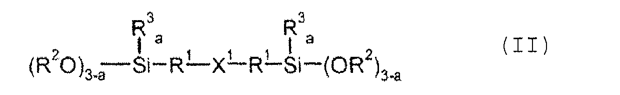 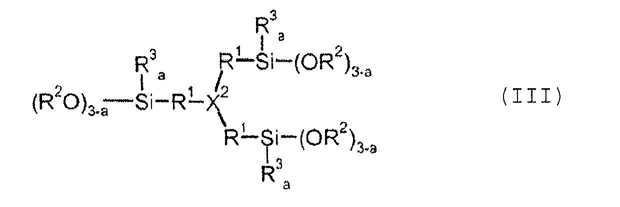 in which R¹ is a linear or branched, optionally cyclic, alkylene group having 1 to 20 carbon atoms, optionally having aromatic components, and optionally having one or more heteroatoms, especially nitrogen atoms,
R² is an alkyl group having 1 to 5 carbon atoms, especially a methyl or ethyl group, or an acyl group,
R³ is an alkyl group having 1 to 8 carbon atoms, especially a methyl group,
X is H or a functional group selected from the group consisting of an oxirane group, OH group, (meth)acryloyloxy group, amino group, SH group, acylthio group and vinyl group, preferably an amino group,
X¹ is a functional group selected from the group consisting of NH, S, S₂ and S₄,
X² is a functional group selected from the group consisting of N and an isocyanurate group, and
a is one of the values 0, 1 or 2, preferably 0.

7. Process according to any of the preceding claims, wherein the proportion of adhesion promoter substance is 90% by weight, especially 95% by weight, preferably 99% by weight, based on the adhesion promoter composition.

8. Process according to any of the preceding claims, wherein the adhesion promoter composition comprises a mixture of
A: polyaminosilane, preferably N-(2-aminoethyl)-3-aminopropyltrimethoxysilane,
B: polysilane, preferably bis(3-trimethoxysilylpropyl)amine, and
C: mercaptosilane, preferably 3-mercaptopropyltrimethoxysilane,
and the weight ratio of A:B:C is especially X:Y:Z, where X is 0.1 to 10, Y is 0.1 to 10 and Z is 0.1 to 10.

9. Process according to any of the preceding claims, wherein the carrier gas is inert with respect to the adhesion promoter substance.

10. Process according to any of the preceding claims, wherein the carrier gas used is nitrogen, oxygen, air and/or a noble gas.

11. Apparatus for performing the process according to any of the preceding claims, comprising a block (4) with a carrier gas channel (14) leading through it, and means (26) of supplying the adhesion promoter substance to the carrier gas channel.

12. Apparatus according to Claim 11, wherein the block (4) is assigned means (32) for heating thereof.

## Revendications

1. Procédé pour appliquer une composition de promoteur d'adhérence, contenant au moins une substance promotrice d'adhérence sur un substrat, où la substance promotrice d'adhérence est évaporée et la vapeur formée est transportée au moyen d'au moins un gaz support vers le substrat.

2. Procédé selon la revendication 1, où l'évaporation de la substance promotrice d'adhérence est réalisée par chauffage à une température inférieure à son point de décomposition.

3. Procédé selon la revendication 1 ou 2, où la substance promotrice d'adhérence est essentiellement exempte de solvant.

4. Procédé selon l'une quelconque des revendications précédentes, où la substance promotrice d'adhérence est hydrolysable.

5. Procédé selon l'une quelconque des revendications précédentes, où la substance promotrice d'adhérence est un composé organosilicié, un composé organique du titane et/ou un composé organique du zirconium.

6. Procédé selon la revendication 5, où le composé organosilicié est un composé de formule (I) ou (II) ou (III) : 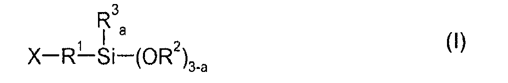 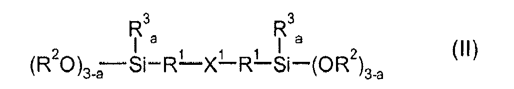 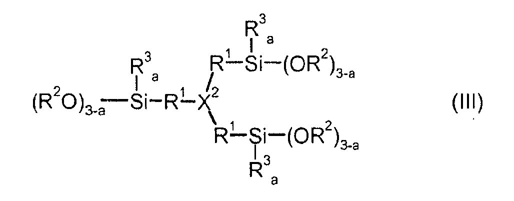 dans lesquelles
R¹ représente un groupe alkylène linéaire ou ramifié, le cas échéant cyclique, comprenant 1 à 20 atomes de carbone, le cas échéant avec des proportions aromatiques et le cas échéant avec un ou plusieurs hétéroatomes, en particulier des atomes d'azote,
R² représente un groupe alkyle comprenant 1 à 5 atomes de carbone, en particulier un groupe méthyle ou éthyle, ou un groupe acyle,
R³ représente un groupe alkyle comprenant 1 à 8 atomes de carbone, en particulier un groupe méthyle,
X représente H ou un groupe fonctionnel, qui est choisi dans le groupe constitué par un groupe oxirane, un groupe OH, un groupe (méth)acryloxy, un groupe amino, un groupe SH, un groupe acylthio et un groupe vinyle, de préférence un groupe amino,
X¹ représente un groupe fonctionnel qui est choisi dans le groupe comprenant NH, S, S₂ et S₄,
X² représente un groupe fonctionnel qui est choisi dans le groupe comprenant N et un isocyanurate, et
a représente une des valeurs 0, 1 ou 2, de préférence 0.

7. Procédé selon l'une quelconque des revendications précédentes, où la proportion de substance promotrice d'adhérence est de 90% en poids, en particulier de 95% en poids, de préférence de 99% en poids, par rapport à la composition de promoteur d'adhérence.

8. Procédé selon l'une quelconque des revendications précédentes, où la composition de promoteur d'adhérence contient un mélange de A : polyaminosilane, de préférence le N-(2-aminoéthyl)-3-aminopropyltriméthoxysilane,
B : polysilane, de préférence la bis-(3-triméthoxysilylpropyl)amine, et
C : mercaptosilane, de préférence le 3-mercaptopropyltriméthoxysilane,
et le rapport pondéral de A:B:C est en particulier X:Y:Z, avec les valeurs X de 0,1 à 10, Y de 0,1 à 10 et
Z de 0,1 à 10.

9. Procédé selon l'une quelconque des revendications précédentes, où le gaz support est inerte par rapport à la substance promotrice d'adhérence.

10. Procédé selon l'une quelconque des revendications précédentes, où on utilise, comme gaz support, de l'azote, de l'oxygène, de l'air et/ou un gaz noble.

11. Dispositif pour réaliser le procédé selon l'une quelconque des revendications précédentes, comprenant un bloc (4) avec un canal (14) pour le gaz support traversant celui-ci et des moyens (26) pour alimenter la substance promotrice d'adhérence dans le canal pour le gaz support.

12. Dispositif selon la revendication 11, où des moyens (32) sont associés au bloc (4) en vue de son chauffage.
